# EUROPEAN PATENT SPECIFICATION

(11) **EP 3 396 511 B1**
(45) Date of publication and mention of the grant of the patent: **03.03.2021**
(21) Application number: 16878523.6
(22) Date of filing: 14.12.2016
(51) Int. Cl.: G06F 3/0481, G06F 3/01, G06F 3/0482

(54) **INFORMATION PROCESSING DEVICE AND OPERATION RECEPTION METHOD**
INFORMATIONSVERARBEITUNGSVORRICHTUNG UND BETRIEBSEMPFANGSVERFAHREN
DISPOSITIF DE TRAITEMENT D'INFORMATIONS ET PROCÉDÉ DE RÉCEPTION D'OPÉRATION

(30) Priority: 21.12.2015 JP 2015248883
(43) Date of publication of application: 31.10.2018
(73) Proprietor: Sony Interactive Entertainment Inc., Tokyo 108-0075 (JP)
(72) Inventor: KAWAMURA, Daisuke, Tokyo 108-0075 (JP)
(74) Representative: Müller Hoffmann & Partner
(86) International application number: PCT/JP2016/087278
(87) International publication number: WO 2017/110632

(56) References cited:
- WO-A1-2014/129204
- WO-A1-2014/199155
- JP-A- H07 271 546
- JP-A- 2005 038 008
- JP-A- 2006 217 627
- JP-A- 2008 033 891
- JP-A- 2014 071 663
- JP-A- 2015 149 634
- US-A1- 2013 246 967
- US-B1- 9 035 878

## Description

### [Technical Field]

The present invention relates to an information processing apparatus that performs information processing through interaction with a user. The present invention also relates to an operation reception method that is applied by the information processing apparatus.

### [Background Art]

There is a known game in which the image of a user's body or a marker is captured by a camera, a region of the captured image is replaced by another image, and the resulting image is displayed on a display. A technology for analyzing not only captured images but also values measured by various sensors attached to or gripped by a user and reflecting the results of analysis in information processing, for example, for a game is used in a wide range of fields, from small-size game machines to leisure facilities, irrespective of their scales.

For example, a certain developed system displays a panoramic image on a head-mounted display. When a user wearing the head-mounted display rotates the user's head, this system displays a panoramic image based on the direction of the user's line of sight. Using the head-mounted display may enhance the sense of immersion and improve the operability of a game or other application. In addition, a walk-through system is developed. When a user wearing the head-mounted display physically moves, the walk-through system allows the user to virtually walk in a space displayed as an image.
Further technological background can be found in US 2013/0246967 A1, WO 2014/199155 A1 and US 9,035,878 B1.

### [Summary]

### [Technical Problems]

Particularly while a user is wearing a head-mounted display or other wearable display, it is difficult for the user to operate a controller, a keyboard, or other input device to input operation information to the system. Further, even when panoramic images and stereoscopic images are used without regard to the type of display device to achieve sophisticated image representation for providing the sense of immersion in a virtual space, the user becomes disinterested if electronic content, such as moving images and games, is displayed by employing a simple screen configuration or a menu or setup screen requiring the use of the aforementioned input device for selecting specific electronic content. Therefore, demanded is a technology that displays such an operation reception screen while maintaining a view of the world expressed by a virtual space without sacrificing ease of operation.

The present invention has been made in view of the above circumstances. An object of the present invention is to provide a technology for displaying an operation reception screen while maintaining ease of operation and a view of the world expressed by a virtual space.

### [Solution to Problems]

In order to solve the above problems, an aspect of the present invention relates to an information processing apparatus according to claim 1.

Other aspects of the present invention relate to an operation reception method according to claim 9 and a computer program according to claim 10.

### [Advantageous Effect of Invention]

The present invention provides an operation reception screen that maintains ease of operation and a view of the world expressed by a virtual space.

### [Brief Description of Drawings]

[FIG. 1]

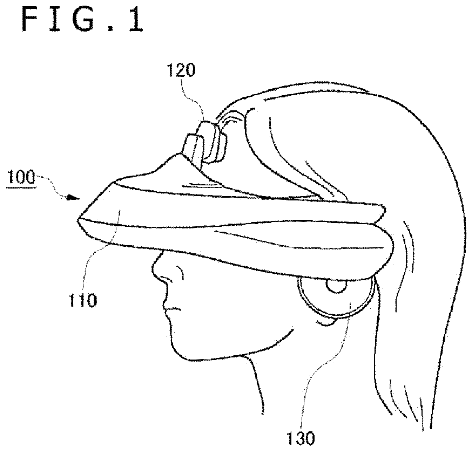

   FIG. 1 is an external view illustrating a head-mounted display according to an embodiment of the present invention.
[FIG. 2]

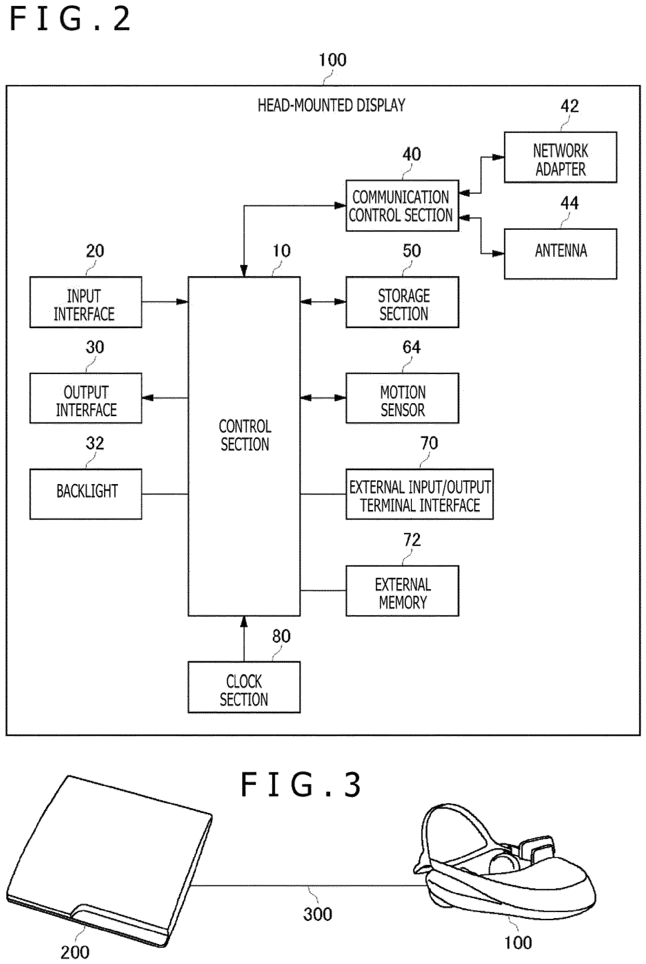

   FIG. 2 is a diagram illustrating a functional configuration of the head-mounted display according to the embodiment.
[FIG. 3]
   FIG. 3 is a diagram illustrating a configuration of an information processing system according to the embodiment.
[FIG. 4]

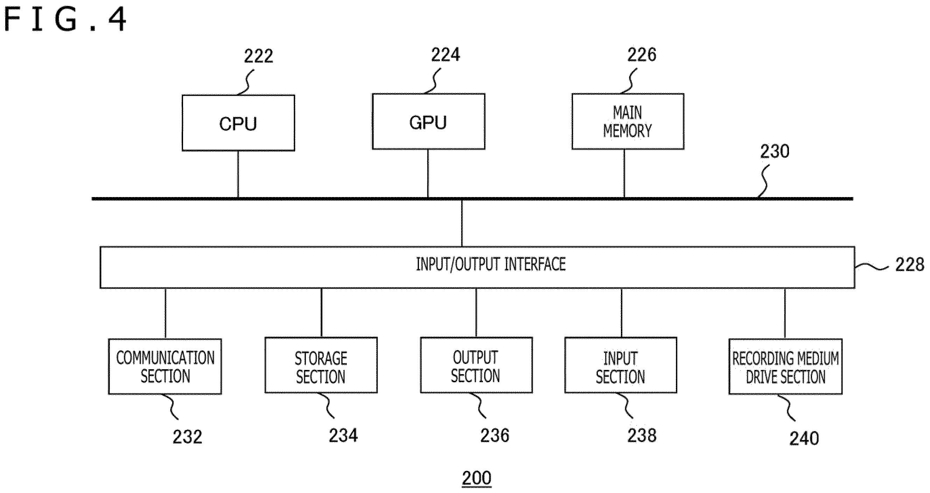

   FIG. 4 is a diagram illustrating an internal circuit configuration of an information processing apparatus according to the embodiment.
[FIG. 5]

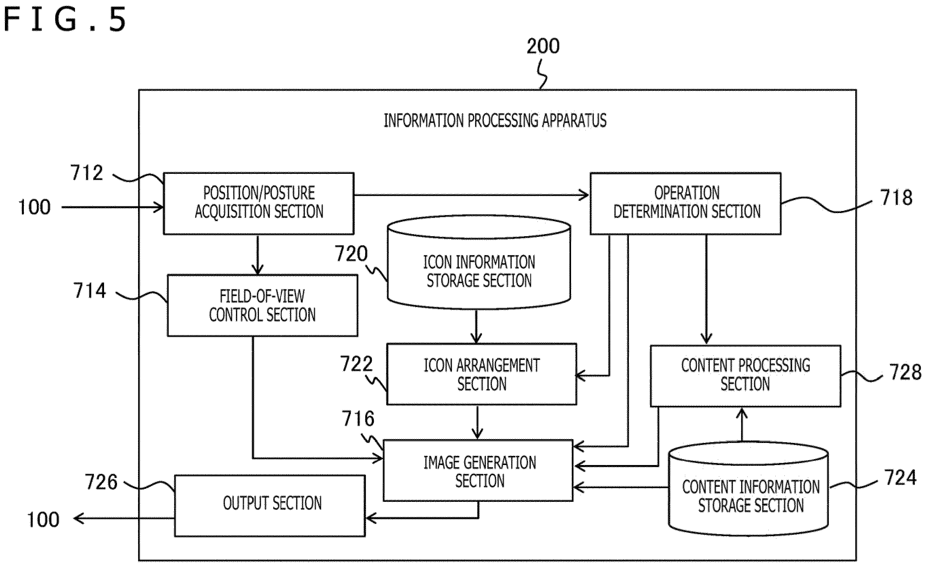

   FIG. 5 a diagram illustrating functional blocks of the information processing apparatus according to the embodiment.
[FIG. 6]

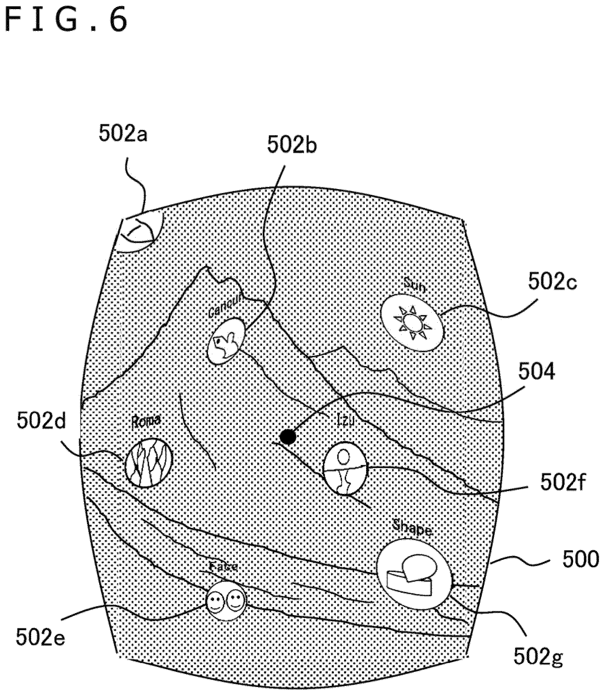

   FIG. 6 is a diagram illustrating a menu screen that is displayed in the embodiment.
[FIG. 7]

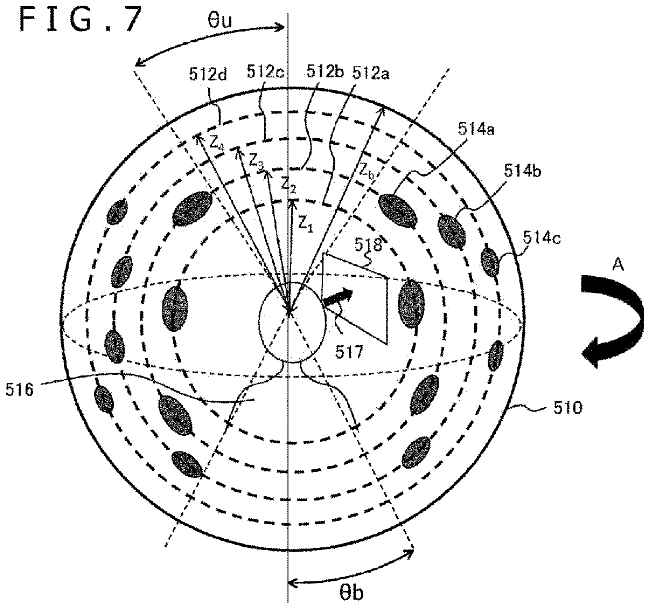

   FIG. 7 is a schematic diagram illustrating an example of a virtual space that is built when a menu image is generated in accordance with the embodiment.
[FIG. 8]

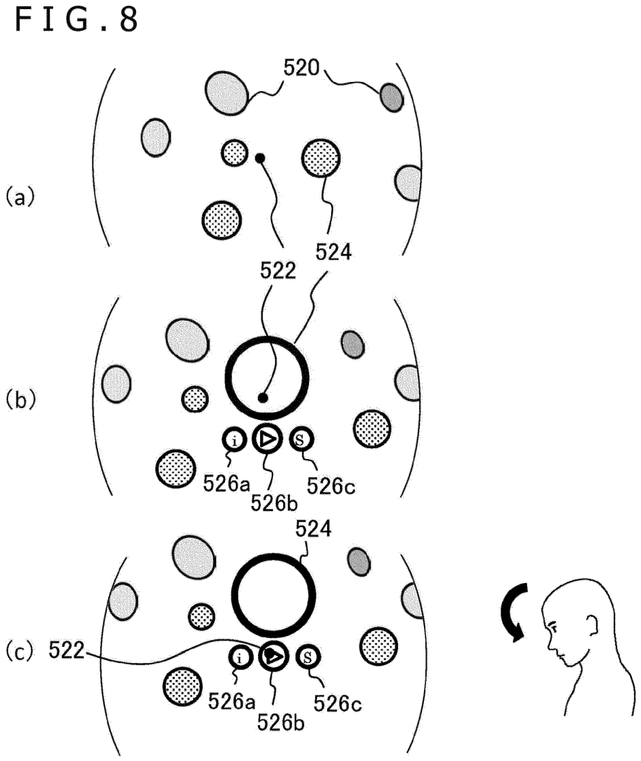

   FIG. 8 depicts a set of diagrams illustrating exemplary menu screen transitions in the embodiment that are based on line-of-sight movement.
[FIG. 9]

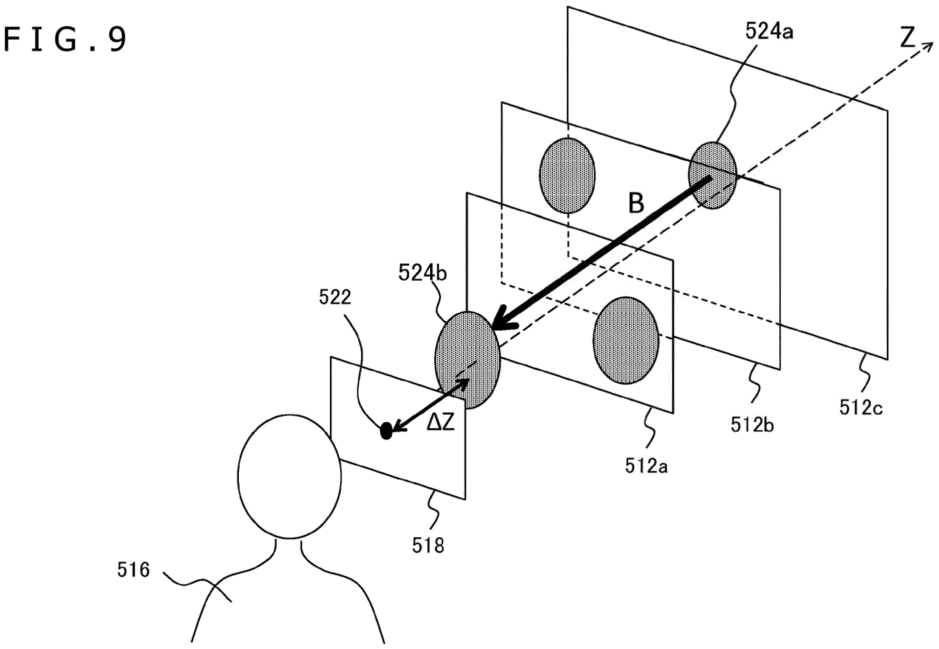

   FIG. 9 is a diagram illustrating changes made to a selected icon in the embodiment.
[FIG. 10]

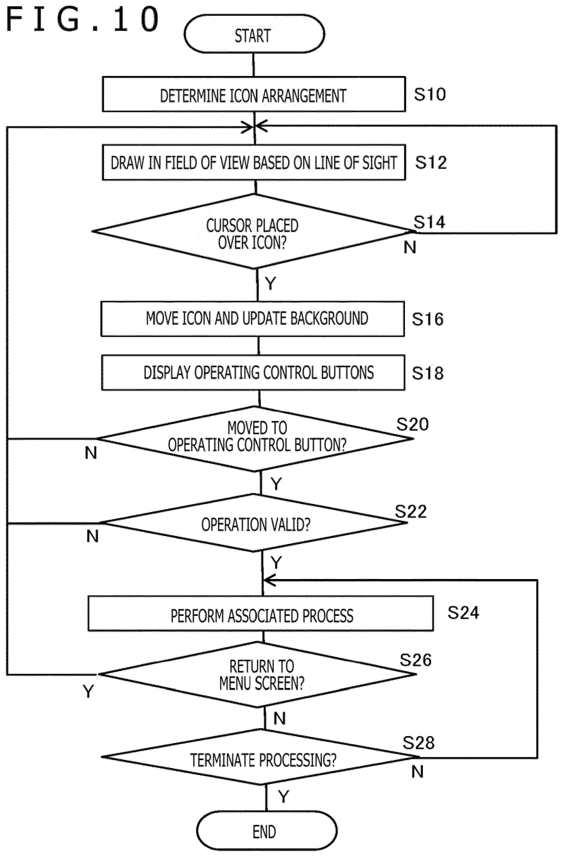

   FIG. 10 is a flowchart illustrating processing steps that are performed by the information processing apparatus according to the embodiment in order to generate a menu screen and receive a selection operation.

### [Description of Embodiment]

An embodiment described below displays a menu screen and other selection operation reception screens while changing the field of view in accordance with the movement of the line of sight of a user. In that sense, the type of image display device is not specifically limited. For example, a wearable display, a flat panel display, or a projector may be used as the image display device. However, the following description assumes that a head-mounted display, which is a wearable display, is used as the image display device.

When a wearable display is used, the user's line of sight can be roughly estimated by a built-in motion sensor. If any other display device is used, the line of sight can be detected when a motion sensor is mounted on the head of the user or the reflection of infrared light is detected by a gaze point detector. Alternatively, an image showing the appearance of the user with a head-mounted marker may be captured and analyzed to estimate the line of sight. Another alternative is to combine some of the above-mentioned technologies.

FIG. 1 is an external view illustrating a head-mounted display 100. The head-mounted display 100 includes a main body section 110, a front head contact section 120, and a lateral head contact section 130. The head-mounted display 100 is a display device that is mounted on the user's head to let the user appreciate, for example, a still image or a moving image displayed on the display and listen, for example, to sound and music outputted from a headphone. A motion sensor built in or externally attached to the head-mounted display 100 is capable of measuring posture information, such as the rotation angle and inclination of the user's head on which the head-mounted display 100 is mounted.

The head-mounted display 100 is an example of a "wearable display device." The wearable display device is not limited to the head-mounted display 100 in a narrow sense, but may be any other arbitrary wearable display device such as a pair of eyeglasses, an eyeglass-mounted display, an eyeglass-mounted camera, a headphone, a headset (a headphone with a microphone), an earphone, an earring, an ear-mounted camera, a cap, a cap-mounted camera, or a hairband.

FIG. 2 is a diagram illustrating a functional configuration of the head-mounted display 100. A control section 10 is a main processor that processes and outputs instructions, data, and signals such as an image signal and a sensor signal. An input interface 20 receives an operating control signal and a setup signal from the user, and supplies the received signals to the control section 10. An output interface 30 receives an image signal from the control section 10, and displays the received image signal on the display. A backlight 32 provides backlight illumination to the liquid-crystal display.

A communication control section 40 establishes wired or wireless communication through a network adapter 42 or an antenna 44 to transmit data inputted from the control section 10 to the outside. Further, the communication control section 40 establishes wired or wireless communication through the network adapter 42 or the antenna 44 to receive data from the outside and output the received data to the control section 10. A storage section 50 temporarily stores, for example, data, parameters, and operating control signals to be processed by the control section 10.

A motion sensor 64 detects posture information, for example, about the rotation angle and inclination of the main body section 110 of the head-mounted display 100. The motion sensor 64 is implemented by an appropriate combination, for example, of a gyro sensor, an acceleration sensor, and an angular acceleration sensor. An external input/output terminal interface 70 is an interface for connecting a peripheral equipment such as a universal serial bus (USB) controller. An external memory 72 is an external memory such as a flash memory.

A clock section 80 sets time information in accordance with a setup signal from the control section 10, and supplies time data to the control section 10. The control section 10 is capable of supplying images and text data to the output interface 30 to display them on the display, and supplying them to the communication control section 40 to let it transmit them to the outside.

FIG. 3 is a diagram illustrating a configuration of an information processing system according to the present embodiment. The head-mounted display 100 is connected to an information processing apparatus 200 by means of wireless communication or an interface 300 for connecting a USB or other peripheral equipment. The information processing apparatus 200 may be further connected to a server through a network. In such an instance, the server may supply to the information processing apparatus 200 an online application such as a game in which a plurality of users can participate through a network. The head-mounted display 100 may be connected to a computer or a mobile terminal instead of the information processing apparatus 200.

The head-mounted display 100 may display a pre-captured 360-degree panoramic still image or panoramic moving image or an artificial panoramic image such as an image of a game space. The head-mounted display 100 may also display a remote live image distributed through a network. However, the present embodiment is not limited to the display of a panoramic image. Whether or not to display a panoramic image may be determined as appropriate depending on the type of display device.

FIG. 4 illustrates an internal circuit configuration of the information processing apparatus 200. The information processing apparatus 200 includes a central processing unit (CPU) 222, a graphics processing unit (GPU) 224, and a main memory 226. These elements are interconnected through a bus 230. The bus 230 is further connected to an input/output interface 228.

The input/output interface 228 is connected to a USB, Institute of Electrical and Electronics Engineers (IEEE) 1394, or other peripheral equipment interface, a communication section 232 formed of a wired or wireless local area network (LAN) network interface, a storage section 234 such as a hard disk drive or a non-volatile memory, an output section 236 for outputting data to a display device such as the head-mounted display 100, an input section 238 for inputting data from the head-mounted display 100, and a recording medium drive section 240 for driving a removable recording medium such as a magnetic disk, an optical disk, or a semiconductor memory.

The CPU 222 provides overall control of the information processing apparatus 200 by executing an operating system stored in the storage section 234. The CPU 222 also executes various programs that are read from a removable recording medium and loaded into the main memory 226 or downloaded through the communication section 232. The GPU 224 functions as a geometry engine and as a rendering processor, performs a drawing process in accordance with a drawing instruction from the CPU 222, and stores a display image in a frame buffer (not depicted). The GPU 224 then converts the display image stored in the frame buffer to a video signal, and outputs the video signal to the output section 236. The main memory 226 is formed of a random-access memory (RAM) to store programs and data necessary for processing.

FIG. 5 illustrates functional blocks of the information processing apparatus 200 according to the present embodiment. The information processing apparatus 200 according to the present embodiment changes the field of view in accordance with the movement of the line of sight as mentioned earlier, and generates a screen that receives an input for selecting one of a plurality of options in accordance with the line of sight (hereinafter referred to as the "menu screen"). The information processing apparatus 200 then receives such a selection input to the menu screen and performs a process indicated by the selection input. The process to be performed based on a selection is not specifically limited. However, it is assumed here as an example that a process handling a game, a moving image, or other electronic content is performed. The menu screen depicts an array of icons representative of various electronic content.

At least some of the functions of the information processing apparatus 200, which are illustrated in FIG. 5, may be implemented by the control section 10 of the head-mounted display 100. Alternatively, at least some of the functions of the information processing apparatus 200 may be implemented by a server that is connected to the information processing apparatus 200 through a network. As another alternative, a menu screen control apparatus capable of generating the menu screen and receiving the selection input may be employed separately from an apparatus for processing electronic content.

FIG. 5 is a block diagram focused on functions that are incorporated in the information processing apparatus 200 and mainly related to menu screen control. The functional blocks illustrated in FIG. 5 can be implemented by hardware such as the CPU, GPU, and memories depicted in FIG. 4, and implemented by software such as programs for performing data input, data retention, image processing, communication, and other functions loaded into a memory, for example, from a recording medium. Thus, it will be understood by those skilled in the art that the functional blocks may be variously implemented by hardware only, by software only, or by a combination of hardware and software. The method of implementing the functional blocks is not specifically limited.

The information processing apparatus 200 includes a position/posture acquisition section 712, a field-of-view control section 714, an icon information storage section 720, an icon arrangement section 722, an operation determination section 718, a content processing section 728, an image generation section 716, a content information storage section 724, and an output section 726. The position/posture acquisition section 712 acquires the position and posture of the head-mounted display 100. The field-of-view control section 714 controls the field of view of a display image in accordance with the user's line of sight. The icon information storage section 720 stores information related to icons to be displayed. The icon arrangement section 722 determines the arrangement of icons in a virtual space. The operation determination section 718 determines that an operation is performed by a change in the line of sight. The content processing section 728 processes selected electronic content. The image generation section 716 generates data for a display image. The content information storage section 724 stores information related to content to be selected. The output section 726 outputs the generated data.

Based on a value detected by the motion sensor 64 of the head-mounted display 100, the position/posture acquisition section 712 acquires at a predetermined rate the position and posture of the user's head on which the head-mounted display 100 is mounted. In accordance with an image captured by an imaging device (not depicted) connected to the information processing apparatus 200, the position/posture acquisition section 712 may further acquire the position and posture of the head and integrate the result of acquisition with the information acquired by the motion sensor.

Based on the position and posture of the head, which are acquired by the position/posture acquisition section 712, the field-of-view control section 714 sets a field-of-view plane (screen) with respect to a three-dimensional space to be drawn. The menu screen according to the present embodiment illustrates on-screen icons in such a manner that the icons seem to be floating in a virtual space. Therefore, the field-of-view control section 714 retains information related to a virtual three-dimensional space for arranging the icons.

In the virtual space, an omnidirectional background object sized to encompass the icons floating in the air and the user's head may be defined in the global coordinate system similarly for general computer graphics. This creates a sense of depth within the space and enhances the impression of the icons floating in the air. The field-of-view control section 714 then sets screen coordinates with respect to the global coordinates at a predetermined rate based on the posture of the head-mounted display 100.

The direction in which the user faces is determined by the posture of the head-mounted display 100, that is, the Euler angles of the user's head. In order to assure that the virtual space is drawn on a screen plane within a field of view based on the direction in which the user faces, the field-of-view control section 714 sets at least the screen coordinates in accordance with the direction in which the user faces. In this instance, the normal vector of the user's face is roughly estimated to be the direction of the line of sight.

More detailed line-of-sight information can be acquired by using a device capable of detecting a gaze point in accordance, for example, with the reflection of infrared light. The following description assumes that the direction of the "line of sight" generically denotes an estimated or detected direction in which the user faces no matter what derivation method is used. In order to prevent an image from being unintentionally blurred, the field-of-view control section 714 may ignore angular changes detected before a predetermined value is exceeded by a change in the posture of the user's head. Further, in a situation where a zoom operation on a displayed image is to be received, the field-of-view control section 714 may adjust the sensitivity of head angle detection in accordance with the zoom magnification.

The icon arrangement section 722 determines the arrangement of icons representative of various electronic content. As mentioned earlier, the icons are depicted in such a manner that they seem to be floating in a virtual space. More specifically, the icons are arranged dispersedly around the user in the virtual space at different distances from the user and in different directions from the user. As a result, an icon positioned in a direction in which the user faces (positioned in a line of sight) can be selected. It is assumed that the icons are circular or other objects representative of thumbnail images of various electronic content.

The icon information storage section 720 stores information related to the shapes of the icons and the electronic content to be iconified. Based on the information stored in the icon information storage section 720, the icon arrangement section 722 identifies information such as the number of icons to be displayed, the categories to which the icons belong, and the priorities of the icons, and optimizes the arrangement of the icons in accordance with the identified information. For example, the balance of overall dispersion is adjusted in accordance with a change in the number of icons. Further, icons belonging to the same category are disposed close to each other. Furthermore, higher-priority icons are disposed closer to the user. As a result, even a large number of icons can be disposed at an appropriate distance from each other and efficiently selected.

Moreover, in response to the movement of the line of sight of the user watching an icon, the icon is moved toward the user or moved back to its previous position. More specifically, an icon placed in the user's line of sight is moved near the user in the virtual space in order to increase the apparent size of the icon and thus indicate that the icon is selected. If another icon is subsequently placed in the user's line of sight, the selected icon is deselected and moved back to its previous position. The icon arrangement section 722 associates identification information related to content with the arrangement information related to an icon representative of the content, and supplies information related to the association to the image generation section 716.

The operation determination section 718 checks the movement of the user's line of sight to determine whether or not an operation other than a field-of-view change in the menu screen is performed. The operation to be determined here is, for example, the selection of an icon, the reproduction of electronic content associated with a selected icon, the start of processing, a download, an information display operation, a display screen transition to an associated web site, and the display of help information. When, for example, the line of sight reaches an icon, it is determined as mentioned earlier that the icon is selected.

Accordingly, an operating control button is additionally displayed to prompt for selecting an operation on the associated content. When the line of sight is directed toward the displayed operating control button, it is determined that the operation is performed. The operation determination section 718 retains criteria for performing the above-described process and setup information related to a process to be performed accordingly. If the operation is determined to have been performed in order to select an icon, the operation determination section 718 notifies the icon arrangement section 722 of the selection of the icon, and thus moves the icon near the user. If, as a result, an operating control button or other additional object is to be displayed, the operation determination section 718 issues a request for such additional object display to the image generation section 716.

Even in a different situation where processing is to be completed within a virtual space for the menu screen, that is, if, for example, an operation is performed to display an overview of selected content or display help information related to the menu screen, the operation determination section 718 issues a relevant processing request to the image generation section 716. If an operation is performed to start the reproduction or processing of electronic content, switch to the display of a web site, or otherwise switch from the display of a virtual space for the menu screen, the operation determination section 718 issues a relevant request to the content processing section 728.

The image generation section 716 draws at a predetermined rate an image to be displayed as the menu screen by projecting a virtual space containing a plurality of icons the arrangement of which is determined by the icon arrangement section 722 onto a screen determined by the field-of-view control section 714. The image generation section 716 further changes a texture image of the omnidirectional object disposed as a background so that the thumbnail image of a selected icon, that is, an icon reached by the line of sight, is displayed over the entire background. Additionally, the background object is rotated centrally around the user at a predetermined extremely low speed to produce staging effects for enhancing the sense of depthwise distance.

The image generation section 716 may generate a menu screen image in such a manner that it is stereoscopically viewable on the head-mounted display 100. That is to say, a left-eye parallax image and a right-eye parallax image may be generated and displayed individually in the left and right regions of the screen of the head-mounted display 100. Further, the image generation section 716 varies a displayed image in compliance with a request from the operation determination section 718. For example, as mentioned earlier, an operating control button for receiving a specific operation is displayed near a selected icon.

Alternatively, the image generation section 716 displays, for example, text information for giving an overview of content or help information related to the menu screen. The text information related to various content and thumbnail images and other data used for the drawing of icons and background are stored in the content information storage section 724 in association with the identification information related to the content. Alternatively, such text information and data may be acquired directly from a server connected through a network. For texture mapping to an omnidirectional background object, the content information storage section 724 should store panoramic image data that is prepared in association with various electronic content or prepared for the menu screen.

A panoramic image is an example of an image depicting a space around a fixed point. An omnidirectional panoramic image depicts a surrounding space (panoramic space) in the form of a sphere. A background image may be formed of prepared moving image content or still image content or formed of rendered computer graphics.

The content processing section 728 processes electronic content associated with a selected icon in compliance with a request from the operation determination section 718. That is to say, the content processing section 728 reproduces a moving or still image or starts a game. Data and programs for such electronic content processing should be stored in the content information storage section 724 in association with the identification information related to the content. The image generation section 716 also generates a moving image and an image for displaying a game screen and other content in compliance with a request from the content processing section 728. General techniques are applicable to detailed processing of content and thus will not be described here.

The output section 726 transmits, at a predetermined rate, data on an image generated by the image generation section 716 to the head-mounted display 100. The output section 726 may further output acoustic data such as music for the menu screen and sound included in various content.

FIG. 6 illustrates a menu screen displayed on the head-mounted display 100. The menu screen 500 depicts objects in the field of view corresponding to the user's line of sight, which are included in a virtual space built around the user. Therefore, the menu screen 500 displays icons 502a to 502g located in the field of view, which are included among a plurality of icons arranged by the icon arrangement section 722. Text information, such as the title of content represented by an icon, is displayed above each icon 502a to 502g. The user can freely shake the user's head vertically, horizontally, or obliquely or look back to move the line of sight and thus the field of view, thereby viewing another icon.

An object representative of a background is also drawn behind the icons 502a to 502g. When an omnidirectional background object is used as mentioned earlier and rotated centrally around the user at an extremely low speed, a texture image attached to it is depicted to create a sense of depth. As a result, staging effects are produced so that the icons 502a to 502g seem to be floating at various locations in a space encompassed by the background object. In the illustrated example, the icons 502a to 502g are circular objects that are obtained by texture mapping the thumbnail images of the electronic content. It should be noted, however, that the icons are not limited to a circular shape.

The menu screen 500 further displays a cursor 504 indicative of a point of intersection between an image plane and the user's line of sight, that is, the user's point of view of the menu screen. As mentioned earlier, the field of view of the menu screen 500 changes with the movement of the line of sight. As a result, the cursor 504 indicative of the point of view remains substantially at the center of the menu screen 500 without regard to the movement of the line of sight. That is to say, the field of view changes with a change in the direction of the user's line of sight. Therefore, the cursor 504 remains in a fixed position on the screen, and a virtual world including the arranged icons and the background object becomes relatively displaced in an opposite direction.

The cursor 504 notifies the user of a position that is recognized as the point of view by the information processing apparatus 200, and enables the user to intuitively adjust the degree of shaking of the user's head, thereby permitting the user to accurately operate a desired icon or a desired operating control button. In that sense, the cursor 504 need not precisely coincide with the user's point of view. Further, the cursor 504 may deviate from the center of the screen depending, for example, on the speed of line-of-sight movement. The menu screen 500 may further display an additional object (not depicted). For example, an operating control button for displaying help information may be disposed at the bottom of a virtual world to appear on the screen and receive an operation when the line of sight is directed downward.

FIG. 7 schematically illustrates an example of a virtual space that is built when a menu image is generated. In the virtual space, as mentioned earlier, a spherical background object 510 having a predetermined radius Zb is set and substantially centered around the head of a user 516. A first layer 512a, a second layer 512b, a third layer 512c, and a fourth layer 512d are then set. These layers are concentric spheres encompassed by the background object 510 and different from each other in size. More specifically, the first layer 512a, the second layer 512b, the third layer 512c, and the fourth layer 512d are set so that their radii Z1, Z2, Z3, and Z4 satisfy the relational expression Z1 < Z2 < Z3 < Z4 < Zb.

The layers are position definition information and are not to be displayed as entities. The icons (e.g., icons 514a, 514b, and 514c) are dispersedly disposed in the planes of the layers set as described above. The direction in which the user faces (a normal vector 517 of the user's face) is then identified as the line of sight. A screen 518 is set in a vertical plane centered around the line of sight, and a virtual space object is projected onto the screen 518. As a result, the menu screen 500 depicted, for example, in FIG. 6 is drawn.

The icons are basically dispersed irregularly in the entire space surrounding the user 516. The term "irregularly" denotes that the icons are not arranged in a line or in a plane, that is, the position coordinates of the icons are not expressed by a certain function, but are determined, for example, by random numbers. Even the menu screen has enhanced design properties and high entertainment properties when the icons are depicted in such a manner that they seem to be floating like stars variously positioned in different directions and at different distances from the user. However, the icons should preferably be excluded from a predetermined range including zenith and nadir in order to ensure that the icons are disposed only in directions in which the user can comfortably face. In consideration of the fact that the user generally finds it more difficult to face upward than downward, the zenith angle *θ*u and the nadir angle *θ*b for defining the predetermined range from which the icons are excluded should preferably be expressed by the relational expression *θ*u > *θ*b.

Further, the longer the distance between the user and a layer, the smaller the size of an icon disposed on the layer may be. As a result, staging effects are produced to express the extent of space so that the icon disposed on the layer seems to exist at a deeper location than the actual radius given to the layer as far as the icon is inside the background object. In addition, when a selected icon is moved near the user, the movement of the icon is expressed in a more dynamic manner. Although the example of FIG. 7 depicts four layers, the number of layers is not limited to four.

The background object 510 to which a panoramic image is texture-mapped as a background is rotated at a predetermined speed around a longitudinal axis passing through the user's head as indicated by arrow A. In the illustrated example, the background object 510 is rotated clockwise. Alternatively, however, the background object 510 may be rotated counterclockwise. As a result, the menu screen 500 illustrated, for example, in FIG. 6 is such that the background moves rightward or leftward. The speed of rotation should be extremely low so that the rotation might not be recognized if the user does not gaze at the background. If the background moves at such a speed that the user viewing an icon recognizes the movement of the background, the user feels as if the user is moving and, in some cases, feels sick or otherwise unwell. When the image is moved at a speed perceivable at a subconscious level, no such abnormality occurs, but visual effects are produced so that the background seems to have an increased depth.

FIG. 8 illustrates menu screen transitions based on the movement of the line of sight. The screen illustrated by an upper portion (a) of FIG. 8 displays a plurality of icons 520, which are displayed in the above-described manner, and a cursor 522 indicative of the user's point of view. As described with reference to FIG. 7, the icons 520 in a virtual space are dispersedly disposed on the layers, which are concentric spheres centered around the user. As a result, the apparent size and orientation vary from one icon 520 to another. Although the upper portion (a) of FIG. 8 depicts only the icons on the menu screen, a title or other character string is additionally displayed above each icon as illustrated in FIG. 6. The size and shape of such a displayed character string also vary with the distance and angle from the user.

In a state illustrated at (a) in FIG. 8, the cursor 522 does not overlap with any icon 520. When, for example, the user shakes the user's head slightly rightward, that is, moves the line of sight slightly to the right, the field of view of the screen moves to the right accordingly. As a result, as illustrated by a middle portion (b) of FIG. 8, the position of the cursor 522 in the screen remains unchanged, but all the icons relatively move to the left. Obviously, the direction in which the line of sight moves is not limited. In any case, all the icons move in a direction opposite to the direction in which the line of sight moves. When the icons move in the above manner until the cursor 522 overlaps with a certain icon 524, the icon 524 is moved toward the user in the virtual space in order to indicate that the icon 524 is selected.

More specifically, as illustrated in FIG. 8, the selected icon 524 moves to the front of the user's eyes so as to increase the apparent size of the selected icon 524. During a transition from (a) to (b), a moving image is naturally displayed to indicate that the icon is approaching. No matter where the icon 524 was positioned and no matter whether the icon 524 was reduced in size depending on the distance from the user, the icon 524 is displayed at a fixed distance from the user and in a fixed size once the icon 524 is selected. As a result, when the line of sight reaches and selects one of variously positioned icons, rendering is performed so that the selected icon is moved toward the user and stopped at a fixed position.

When an icon is selected, operating control buttons are additionally displayed below the selected icon 524. Various operating control buttons may be displayed depending on the type of content to be represented by the icon. However, FIG. 8 assumes that moving image content is represented by the icon, and depicts three operating control buttons, namely, an information display button 526a, a reproduction start button 526b, and an associated web site display button 526c (hereinafter may be generically referred to as the "operating control buttons 526"). When the user nods or otherwise moves the line of sight downward in the above state as indicated at right of a lower portion (c) of FIG. 8, the field of view of the screen accordingly moves downward.

As a result, as indicated by the screen depicted at (c) in FIG. 8, the position of the cursor 522 on the screen remains unchanged, but the icons relatively move upward. When this causes the cursor 522 to overlap with a certain operating control button 526, an operation assigned to the operating control button is received. In the example of FIG. 8, the cursor 522 overlaps with the reproduction start button 526b. Therefore, a reproduction start operation for the moving image content represented by the selected icon 524 is received to start a reproduction process. In this instance, the displayed menu screen is replaced by a moving image. Thus, the displayed moving image is controlled by the content processing section 728.

If the cursor 522 overlaps with the information display button 526a, the head-mounted display 100 switches to the display of text information for giving an overview of the moving image in the same virtual space as for the menu screen. If the cursor 522 overlaps with the associated web site display button 526c, the head-mounted display 100 switches to the display of an associated web site by connecting to a server offering the web site. As another operating control button, a button for downloading electronic content represented by a selected icon may be displayed.

When the operating control buttons 526 appear in the lower vicinity of the selected icon 524 as illustrated, various operations can be performed with a reduced amount of labor while maintaining continuity with an icon selection. As a result, the operating control buttons 526 may overlap with unselected icons. However, the unselected icons are made unselectable while the operating control buttons are displayed. This ensures that an operation on an operating control button takes precedence.

Certain conditions may be set for validating an operation on an operating control button and starting an associated process. For example, an operation on an operating control button may be determined to be valid on condition that a predetermined period of time has elapsed since the cursor 522 overlapped with the operating control button. In such an instance, when the cursor 522 overlaps with the operating control button, an indicator may be separately displayed to indicate the length of time remaining before the operation becomes valid. This addresses the problem where the cursor accidentally overlaps with an operating control button due to slight movement of the user's head and frequently starts an unintended process. Further, even if the cursor 522 is intentionally moved to an operating control button, a certain amount of time is available to achieve cancellation before the start of a process.

FIG. 9 is a diagram illustrating changes applied to a selected icon. As described with reference to FIG. 7, the screen 518 is set based on the line of sight of the user 516. The cursor 522 representative of the point of view of the user is displayed at the center of the screen as illustrated in FIG. 8. Meanwhile, the first layer 512a, the second layer 512b, and the third layer 512c, which are concentric spheres, are set around the user 516. However, FIG. 9 depicts a limited portion of each layer.

When, in a situation where the icons are disposed on the above-mentioned layers, the line of sight reaches an icon 524a disposed on the third layer 512c to let the icon 524a overlap with the cursor 522, the icon 524a is linearly moved toward the user as indicated by arrow B. The icon 524a is then stopped at a position that is at a predetermined distance ΔZ from the screen 518 (the resulting icon is now referred to as the icon 524b). When a sense of depth is created as mentioned earlier by reducing the size of an icon on a relatively deep layer in an initial arrangement, the size of the icon gradually increases with a decrease in the distance from the user. As a result, it looks like as if the icon having the same size as the others has moved from a distance.

An icon overlapping with the cursor 522 in the virtual space moves on the Z-axis, which is the direction of the line of sight. Therefore, an initial arrangement should preferably be determined so that no other icon exists on the Z-axis. More specifically, when the direction from the head of the user 516a is defined by a plurality of radial lines, one layer is selected for icon arrangement so that two or more icons are not disposed on a single line. The angle formed by the radial lines is set based on the number of icons so that an icon moving to a position ΔZ does not come into contact with an icon on a neighboring radial line.

When the icons are arranged in the above-described manner, artificiality can be avoided, for example, by preventing a selected icon from moving through another icon. Under the above constraint conditions, various approaches are conceivable for determining the layer on each radial line on which an icon is to be disposed, that is, determining how to dispersedly dispose a plurality of icons. For example, each time the number of icons to be displayed is increased or decreased, the icon arrangement section 722 updates the arrangement of icons so as to avoid unnatural bias. The number of icons may increase or decrease when, for example, the user downloads new electronic content or deletes existing electronic content.

Further, the distance from the user may be determined based on priority given to an icon. For example, the frequency with which each icon was selected in the past is recorded, and icons selected with a higher frequency are disposed on a layer closer to the user. An icon representative of recommended electronic content may be acquired, for example, from a server in accordance with an icon selection history and disposed on a layer close to the user. In such an instance, the icon selection history is stored in the icon information storage section 720 and referenced by the icon arrangement section 722 to determine the layer on which an icon is to be disposed or ask a server about a recommendation and acquire relevant data.

Furthermore, the distance between the icons may be adjusted based on the types of electronic content represented by the icons. For example, the icons belonging to the same category are disposed close to each other in the virtual space so that a cluster is formed as viewed from the user. If information having a hierarchical structure is used, for example, in a case where pieces of content represented by icons are categorized, and the cursor overlaps with an icon representative of information at an upper hierarchical level, icons representative of relevant information at a subordinate hierarchical level may emerge.

Operations of a menu image generation device that can be implemented by the above-described configuration will now be described. FIG. 10 is a flowchart illustrating processing steps that are performed by the information processing apparatus 200 in order to generate a menu screen and receive a selection operation. Processing indicated in the flowchart starts when, for example, the user wears the head-mounted display 100 and turns on the information processing apparatus 200. First of all, based on the icon information stored in the icon information storage section 720, the icon arrangement section 722 in the information processing apparatus 200 identifies, for example, the number, priority, and category of pieces of content for which icons are to be displayed, and accordingly determines the arrangement of icons in a virtual space (step S10).

Meanwhile, the field-of-view control section 714 defines the virtual space containing, for example, a background object, and determines the field-of-view plane (screen) with respect to the virtual space in accordance with the position and posture of the user's head. The image generation section 716 draws the menu screen by projecting the virtual space containing the arrangement of icons onto the screen (step S12). A common computer graphics technology can be applied to the drawing process. Further, the image generation section 716 displays the cursor representative of the user's point of view over the menu screen.

As basic subsequent operations, the field-of-view control section 714 changes the screen in accordance with a change in the posture of the user's head, and the image generation section 716 repeats the process of drawing an image on the screen at a predetermined rate. At the same time, a background object to which a background image is mapped is continuously rotated horizontally around the user at an extremely low speed. As the output section 726 sequentially outputs generated image data to the head-mounted display 100, the menu screen is dynamically depicted in accordance with the movement of the line of sight.

If, in the above state, the operation determination section 718 determines that the cursor overlaps with an icon ("Y" at step S14), the icon information storage section 720 selects the icon by moving it toward the user in the virtual space (step S16). In this instance, the image generation section 716 updates the image of the background object as needed to match the selected icon. This background image remains displayed until another icon is selected. Further, predetermined operating control buttons are displayed below the selected icon (step S18).

If the user nods in the above state, the cursor moves to an operating control button ("Y" at step S20). If, for example, a predetermined period of time elapses and an operation on the operating control button is determined to be valid ("Y" at step S22), the operation determination section 718 requests the image generation section 716 or the content processing section 728 to perform a process associated with the type of operated operating control button. The associated process is then performed (step S24).

If the cursor does not move to a displayed operating control button (step S18, "N" at step S20) or if the cursor moved to a displayed operating control button is not validated and is removed ("Y" at step S20, "N" at step S22), only the drawing process in step S12 continues. In this instance, even if the cursor is removed from an operating control button or from an icon with which the cursor overlapped in step S14, an icon moved near the user in step S16 remains stationary and the operating control button remains displayed. In some cases, the icon may remain selected and eventually move out of the field of view.

Each time the cursor overlaps with an icon, processing steps S16 and S18 are both performed on the icon. As a result, if the line of sight is freely moved, a visible change occurs so that an icon reached by the line of sight moves and then returns to the previous position or moves out of the field of view. While the cursor does not overlap with an icon, the image generation section 716 draws the virtual space only in accordance with a change in the field of view ("N" at step S14, step S12).

Meanwhile, if an operation is performed to return to the menu screen after a process for an operating control button is performed in step S24, the image generation section 716 resumes the process of drawing the menu screen ("Y" at step S26, step S12). If, by contrast, the operation for returning to the menu screen is not performed, the image generation section 716 or the content processing section 728 continues with the ongoing process ("N" at step S26, "N" at step S28, step S24). However, if such processing needs to be terminated due, for instance, to a user operation, the information processing apparatus 200 terminates the entire process ("Y" at step S28).

According to the present embodiment described above, the menu screen receiving a selection input from a plurality of icons is depicted as a virtual space where the field of view changes with a change in the direction in which the user faces and with a change in the user's line of sight. In this instance, an omnidirectional background object is disposed in the virtual space, and the icons are dispersedly disposed in the virtual space. An icon reached by the line of sight due, for instance, to head shaking is then moved to the front of the user's eyes, and operating control buttons for receiving a detailed operation on the icon are displayed below the icon.

When an icon disposed at a distance is moved to the front of the user's eyes, a title displayed above the icon and the image of the icon are sufficiently visible. This makes it possible to dispose icons at various distances in a virtual space, display a large number of icons at a time, and select content while enjoying a view of the world in the virtual space. Further, when a predetermined range including zenith and nadir is defined as a region where icons cannot be disposed, a selection operation can be comfortably performed. Furthermore, staging effects can be produced to create a sense of depth by rotating a background object at a low unrecognizable speed or reducing the size of an object such as a relatively distant icon. In this manner, a unique view of the world can be expressed.

Enhanced icon selection efficiency and high entertainment properties can be both provided by using a background image suitable for a selected icon or adjusting an arrangement pattern in accordance with the attributes of content represented by a particular icon. As described above, an advanced selection operation can be performed based on the movement of the line of sight with respect to a virtual space. As described above, the present embodiment makes it possible to perform a sophisticated selection operation by moving the line of sight with respect to a virtual space. Therefore, the present embodiment is particularly effective when an input device of a head-mounted display or other hardware is difficult to operate. Further, if content selected in the above manner provides the sense of immersion, the selection operation can be performed by using an expression suitable for a view of the world of the content.

The scope of the present invention is defined in the appended claims.

### [Reference Signs List]

10 Control section, 20 Input interface, 30 Output interface, 32 Backlight, 40 Communication control section, 42 Network adapter, 44 Antenna, 50 Storage section, 64 Motion sensor, 70 External input/output terminal interface, 72 External memory, 80 Clock section, 100 Head-mounted display, 200 Information processing apparatus, 222 CPU, 224 GPU, 226 Main memory, 712 Position/posture acquisition section, 714 Field-of-view control section, 716 Image generation section, 718 Operation determination section, 720 Icon information storage section, 722 Icon arrangement section, 724 Content information storage section, 726 Output section, 728 Content processing section.

### [Industrial Applicability]

As described above, the present invention is applicable to a game machine, an information processing apparatus, an image display device, and a system including one of them.

## Claims

1. An information processing apparatus (200) adapted for generating a menu screen (500) including a plurality of icons (502a-502g, 514a-514c, 520, 524) and receiving a selection operation performed by a user (516), the information processing apparatus (200) comprising:
an icon arrangement section (722) adapted for arranging the icons in a virtual space;
a field-of-view control section (714) adapted for acquiring posture information related to a head of the user (516) and determining a field-of-view plane with respect to the virtual space in accordance with the acquired posture information;
an image generation section (716) adapted for drawing an image to be projected into the virtual space with respect to the field-of-view plane, generating the menu screen (500) over which a cursor (504, 522) indicating point of view of the user (516) is displayed, and outputting the generated menu screen (500) to a display device; and
an operation determination section (718) adapted for identifying an operation in accordance with a positional relationship between the cursor (504, 522) and an icon image drawn on the menu screen (500),
wherein the icon arrangement section (722) is adapted to arrange the icons (502a-502g, 514a-514c, 520, 524) in a spherical background object centered around the head of the user (516) in the virtual space in such a manner that the icons (502a-502g, 514a-514c, 520, 524) differ from each other in a direction and a distance from the user (516),
and **characterised in that**, when the cursor (504, 522) overlaps with one of the icons (502a-502g, 514a-514c, 520, 524), the image generation section (716) is adapted to texture-map an image corresponding to the icon (502a-502g, 514a-514c, 520, 524) to an inside of the background object and rotate the background object centrally around the head of the user (516) at a predetermined speed.

2. The information processing apparatus (200) according to claim 1, wherein, when the cursor (504, 522) overlaps with one of the icons (502a-502g, 514a-514c, 520, 524), the icon arrangement section (722) is adapted to move the icon (502a-502g, 514a-514c, 520, 524) in such a direction as to decrease the distance from the user (516) in the virtual space, and, when the cursor (504, 522) overlaps with another icon (502a-502g, 514a-514c, 520, 524), the icon arrangement section (722) is adapted to return the moved icon (502a-502g, 514a-514c, 520, 524) to the previous position.

3. The information processing apparatus 8200) according to claim 2, wherein the image generation section (716) is adapted to additionally display an operating control button (526) below the moved icon (502a-502g, 514a-514c, 520, 524) in order to receive an operation on content represented by the moved icon (502a-502g, 514a-514c, 520, 524).

4. The information processing apparatus (200) according to claim 2 or 3, wherein the icon arrangement section (722) is adapted to set an object model size of an icon (502a-502g, 514a-514c, 520, 524) in such a manner that the longer the distance between the icon (502a-502g, 514a-514c, 520, 524) and the user 8516), the smaller the object model size of the icon (502a-502g, 514a-514c, 520, 524), and, when moving the icon (502a-502g, 514a-514c, 520, 524) in such a direction as to decrease the distance from the user (516), the icon arrangement section (722) is adapted to gradually increase the object model size of the icon (502a-502g, 514a-514c, 520, 524).

5. The information processing apparatus (200) according to any one of claims 1 to 4, wherein the icon arrangement section (722) is adapted to arrange the icons (502a-502g, 514a-514c, 520, 524) in such a manner that a group of icons (502a-502g, 514a-514c, 520, 524) disposed close to each other in the virtual space is formed for each category to which a target represented by each icon (502a-502g, 514a-514c, 520, 524) belongs.

6. The information processing apparatus (200) according to any one of claims 1 to 5, wherein the icon arrangement section (722) is adapted to update the arrangement of the icons (502a-502g, 514a-514c, 520, 524) in accordance with an increase or decrease in the number of icons (502a-502g, 514a-514c, 520, 524) to be displayed.

7. The information processing apparatus (722) according to any one of claims 1 to 6, wherein, when the cursor (504, 522) overlaps with an icon (502a-502g, 514a-514c, 520, 524) representative of hierarchical information at an upper hierarchical level, the icon arrangement section (722) is adapted to newly dispose an icon (502a-502g, 514a-514c, 520, 524) representative of relevant information at a subordinate hierarchical level.

8. The information processing apparatus (200) according to any one of claims 1 to 7, wherein the icon arrangement section (722) is adapted to define a predetermined range as a region where icons (502a-502g, 514a-514c, 520, 524) cannot be disposed, the predetermined range including zenith and nadir for the head of the user (516) in the virtual space.

9. An operation reception method applied by an information processing apparatus (200) that generates a menu screen (500) including a plurality of icons (502a-502g, 514a-514c, 520, 524) and receives a selection operation performed by a user 8516), the operation reception method comprising the steps of:
arranging the icons (502a-502g, 514a-514c, 520, 524) in a virtual space;
acquiring posture information related to a head of the user (516) and determining a field-of-view plane with respect to the virtual space in accordance with the acquired posture information;
drawing an image to be projected into the virtual space with respect to the field-of-view plane, generating the menu screen (500) over which a cursor (504, 522) indicating point of view of the user (516) is displayed, and outputting the generated menu screen to a display device; and
identifying an operation in accordance with a positional relationship between the cursor (504, 522) and an icon image drawn on the menu screen (500),
wherein the step of arranging the icons (502a-502g, 514a-514c, 520, 524) is arranging the icons (502a-502g, 514a-514c, 520, 524) in a spherical background object centered around the head of the user (516) in the virtual space in such a manner that the icons (502a-502g, 514a-514c, 520, 524) differ from each other in a direction and a distance from the user (516),
and **characterised in that**, when the cursor (504, 522) overlaps with one of the icons (502a-502g, 514a-514c, 520, 524), an image corresponding to the icon (502a-502g, 514a-514c, 520, 524) is texture-mapped to an inside of the background object and the background object is rotated centrally around the head of the user (516) at a predetermined speed.

10. A computer program designed for a computer that generates a menu screen (500) including a plurality of icons (502a-502g, 514a-514c, 520, 524) and receives a selection operation performed by a user (516), the computer program causing the computer to implement functions of:
arranging the icons (502a-502g, 514a-514c, 520, 524) in a virtual space;
acquiring posture information related to a head of the user (516) and determining a field-of-view plane with respect to the virtual space in accordance with the acquired posture information;
drawing an image to be projected into the virtual space with respect to the field-of-view plane, generating the menu screen (500) over which a cursor (504, 522) indicating point of view of the user (516) is displayed, and outputting the generated menu screen (500) to a display device; and
identifying an operation in accordance with a positional relationship between the cursor (504, 522) and an icon image drawn on the menu screen (500),
wherein the function of arranging the icons (502a-502g, 514a-514c, 520, 524) is arranging the icons (502a-502g, 514a-514c, 520, 524) in a spherical background object centered around the head of the user (516) in the virtual space in such a manner that the icons (502a-502g, 514a-514c, 520, 524) differ from each other in a direction and a distance from the user (516),
and **characterised in that**, when the cursor (504, 522) overlaps with one of the icons (502a-502g, 514a-514c, 520, 524), an image corresponding to the icon (502a-502g, 514a-514c, 520, 524) is texture-mapped to an inside of the background object and the background object is rotated centrally around the head of the user (516) at a predetermined speed.

## Patentansprüche

1. Informationsverarbeitungsvorrichtung (200), die angepasst ist zum Erzeugen eines Menübildschirms (500), der mehrere Symbole (502a-502g, 514a-514c, 520, 524) aufweist, und zum Empfangen einer von einem Benutzer (516) durchgeführten Auswahloperation, wobei die Informationsverarbeitungsvorrichtung (200) umfasst:
eine Symbolanordnungssektion (722), die angepasst ist zum Anordnen der Symbole in einem virtuellen Raum;
eine Sichtfeldsteuersektion (714), die angepasst ist zum Erfassen von Haltungsinformationen in Bezug auf den Kopf des Benutzers (516) und zum Bestimmen einer Sichtfeldebene in Bezug auf den virtuellen Raum gemäß den erfassten Haltungsinformationen;
eine Bilderzeugungssektion (716), die angepasst ist zum Zeichnen eines Bildes, das in Bezug auf die Sichtfeldebene in den virtuellen Raum projiziert werden soll, Erzeugen des Menübildschirms (500), auf dem ein Cursor (504, 522), der den Blickpunkt des Benutzers (516) angibt, angezeigt wird, und Ausgeben des erzeugten Menübildschirms (500) an ein Anzeigegerät; und
eine Operationsbestimmungssektion (718), die angepasst ist zum Identifizieren einer Operation gemäß einer Positionsbeziehung zwischen dem Cursor (504, 522) und einem auf dem Menübildschirm (500) gezeichneten Symbolbild,
wobei die Symbolanordnungssektion (722) dazu angepasst ist, die Symbole (502a-502g, 514a-514c, 520, 524) in einem sphärischen Hintergrundobjekt anzuordnen, das in dem virtuellen Raum derart um den Kopf des Benutzers (516) zentriert ist, dass sich die Symbole (502a-502g, 514a-514c, 520, 524) in einer Richtung und einem Abstand von dem Benutzer (516) voneinander unterscheiden,
und **dadurch gekennzeichnet, dass**
wenn sich der Cursor (504, 522) mit einem der Symbole (502a-502g, 514a-514c, 520, 524) überlappt, die Bilderzeugungssektion (716) dazu angepasst ist, ein dem Symbol (502a-502g, 514a-514c, 520, 524) entsprechendes Bild durch Texture-Mapping auf ein Inneres des Hintergrundobjekts abzubilden und das Hintergrundobjekt mit einer vorgegebenen Geschwindigkeit zentral um den Kopf des Benutzers (516) zu drehen.

2. Informationsverarbeitungsvorrichtung (200) nach Anspruch 1, wobei, wenn sich der Cursor (504, 522) mit einem der Symbole (502a-502g, 514a-514c, 520, 524) überlappt, die Symbolanordnungssektion (722) dazu angepasst ist, das Symbol (502a-502g, 514a-514c, 520, 524) in eine derartige Richtung zu verschieben, dass der Abstand von dem Benutzer (516) in dem virtuellen Raum verringert wird, und
wenn sich der Cursor (504, 522) mit einem anderen Symbol (502a-502g, 514a-514c, 520, 524) überlappt, die Symbolanordnungssektion (722) dazu angepasst ist, das verschobene Symbol (502a-502g, 514a-514c, 520, 524) an die vorherige Position zurückzusetzen.

3. Informationsverarbeitungsvorrichtung (200) nach Anspruch 2, wobei die Bilderzeugungssektion (716) dazu angepasst ist, zusätzlich eine Operationssteuerschaltfläche (526) unter dem verschobenen Symbol (502a-502g, 514a-514c, 520, 524) anzuzeigen, um eine Operation für Inhalte zu erhalten, die durch das verschobene Symbol (502a-502g, 514a-514c, 520, 524) repräsentiert werden.

4. Informationsverarbeitungsvorrichtung (200) nach Anspruch 2 oder 3, wobei die Symbolanordnungssektion (722) dazu angepasst ist, eine Objektmodellgröße eines Symbols (502a-502g, 514a-514c, 520, 524) auf derartige Weise festzulegen, dass je größer der Abstand zwischen dem Symbol (502a-502g, 514a-514c, 520, 524) und dem Benutzer (516) ist, desto kleiner ist die Objektmodellgröße des Symbols (502a-502g, 514a-514c, 520, 524), und wenn das Symbol (502a-502g, 514a-514c, 520, 524) in eine derartigen Richtung verschoben wird, dass der Abstand zu dem Benutzer (516) verringert wird, die Symbolanordnungssektion (722) dazu angepasst ist, die Objektmodellgröße des Symbols (502a-502g, 514a-514c, 520, 524) allmählich zu vergrößern.

5. Informationsverarbeitungsvorrichtung (200) nach einem der Ansprüche 1 bis 4, wobei die Symbolanordnungssektion (722) dazu angepasst ist, die Symbole (502a-502g, 514a-514c, 520, 524) auf derartige Weise anzuordnen, dass eine Gruppe von Symbolen (502a-502g, 514a-514c, 520, 524), die in dem virtuellen Raum nahe beieinander angeordnet sind, für jede Kategorie gebildet wird, zu der ein durch jedes Symbol (502a-502g, 514a-514c, 520, 524) repräsentiertes Ziel gehört.

6. Informationsverarbeitungsvorrichtung (200) nach einem der Ansprüche 1 bis 5, wobei die Symbolanordnungssektion (722) dazu angepasst ist, die Anordnung der Symbole (502a-502g, 514a-514c, 520, 524) gemäß einer Zunahme oder Abnahme der Anzahl der anzuzeigenden Symbole (502a-502g, 514a-514c, 520, 524) zu aktualisieren.

7. Informationsverarbeitungsvorrichtung (722) nach einem der Ansprüche 1 bis 6, wobei, wenn sich der Cursor (504, 522) mit einem Symbol (502a-502g, 514a-514c, 520, 524) überlappt, das für hierarchische Informationen auf einer oberen Hierarchieebene repräsentativ ist, die Symbolanordnungssektion (722) dazu angepasst ist, ein Symbol (502a-502g, 514a-514c, 520, 524), das für relevante Informationen auf einer untergeordneten Hierarchieebene repräsentativ ist, neu anzuordnen.

8. Informationsverarbeitungsvorrichtung (200) nach einem der Ansprüche 1 bis 7, wobei die Symbolanordnungssektion (722) dazu angepasst ist, einen vorgegebenen Bereich als eine Region zu definieren, in der Symbole (502a-502g, 514a-514c, 520, 524) nicht angeordnet werden können, wobei der vorgegebene Bereich den Zenit und den Nadir für den Kopf des Benutzers (516) in dem virtuellen Raum aufweist.

9. Operationsempfangsverfahren, das von einer Informationsverarbeitungsvorrichtung (200) angewendet wird, die einen Menübildschirm (500), der mehrere Symbole (502a-502g, 514a-514c, 520, 524) aufweist, erzeugt, und eine von einem Benutzer (516) ausgeführte Auswahloperation empfängt, das Operationsempfangsverfahren umfassend die Schritte:
Anordnen der Symbole (502a-502g, 514a-514c, 520, 524) in einem virtuellen Raum;
Erfassen von Haltungsinformationen in Bezug auf den Kopf des Benutzers (516) und Bestimmen einer Sichtfeldebene in Bezug auf den virtuellen Raum gemäß den erfassten Haltungsinformationen;
Zeichnen eines Bildes, das in Bezug auf die Sichtfeldebene in den virtuellen Raum projiziert werden soll, Erzeugen des Menübildschirms (500), auf dem ein Cursor (504, 522) angezeigt wird, der den Blickpunkt des Benutzers (516) angibt; und Ausgeben des erzeugten Menübildschirms an ein Anzeigegerät; und
Identifizieren einer Operation gemäß einer Positionsbeziehung zwischen dem Cursor (504, 522) und einem auf dem Menübildschirm (500) gezeichneten Symbolbild;
wobei der Schritt des Anordnens der Symbole (502a-502g, 514a-514c, 520, 524) ein Anordnen der Symbole (502a-502g, 514a-514c, 520, 524) in einem sphärischen Hintergrundobjekt ist, das in dem virtuellen Raum derart um den Kopf des Benutzers (516) zentriert ist, dass sich die Symbole (502a-502g, 514a-514c, 520, 524) in einer Richtung und einem Abstand von dem Benutzer (516) voneinander unterscheiden;
und **dadurch gekennzeichnet, dass**
wenn sich der Cursor (504, 522) mit einem der Symbole (502a-502g, 514a-514c, 520, 524) überlappt, ein Bild, das dem Symbol (502a-502g, 514a-514c, 520, 524) entspricht, durch Texture-Mapping auf ein Inneres des Hintergrundobjekts abgebildet wird, und das Hintergrundobjekt mit einer vorgegebenen Geschwindigkeit zentral um den Kopf des Benutzers (516) gedreht wird.

10. Computerprogramm, das für einen Computer entworfen ist, das einen Menübildschirm (500), der mehrere Symbole (502a-502g, 514a-514c, 520, 524) aufweist, erzeugt, und eine Auswahloperation, die von einem Benutzer (516) ausgeführt wird, empfängt, wobei das Computerprogramm den Computer veranlasst, Funktionen zu implementieren zum:
Anordnen der Symbole (502a-502g, 514a-514c, 520, 524) in einem virtuellen Raum;
Erfassen von Haltungsinformationen in Bezug auf den Kopf des Benutzers (516) und Bestimmen einer Sichtfeld-ebene in Bezug auf den virtuellen Raum gemäß den erfassten Haltungsinformationen;
Zeichnen eines Bildes, das in Bezug auf die Sichtfeldebene in den virtuellen Raum projiziert werden soll, Erzeugen des Menübildschirms (500), auf dem ein Cursor (504, 522) angezeigt wird, der den Blickpunkt des Benutzers (516) angibt; und Ausgeben des erzeugten Menübildschirms (500) an ein Anzeigegerät; und
Identifizieren einer Operation gemäß einer Positionsbeziehung zwischen dem Cursor (504, 522) und einem auf dem Menübildschirm (500) gezeichneten Symbolbild;
wobei der Schritt des Anordnens der Symbole (502a-502g, 514a-514c, 520, 524) ein Anordnen der Symbole (502a-502g, 514a-514c, 520, 524) in einem sphärischen Hintergrundobjekt ist, das in dem virtuellen Raum derart um den Kopf des Benutzers (516) zentriert ist, dass sich die Symbole (502a-502g, 514a-514c, 520, 524) in einer Richtung und einem Abstand von dem Benutzer (516) voneinander unterscheiden;
und **dadurch gekennzeichnet, dass**
wenn sich der Cursor (504, 522) mit einem der Symbole (502a-502g, 514a-514c, 520, 524) überlappt, ein Bild, das dem Symbol (502a-502g, 514a-514c, 520, 524) entspricht, durch Texture-Mapping auf ein Inneres des Hintergrundobjekts abgebildet wird, und das Hintergrundobjekt mit einer vorgegebenen Geschwindigkeit zentral um den Kopf des Benutzers (516) gedreht wird.

## Revendications

1. Appareil de traitement d'informations (200) conçu pour générer un écran de menu (500) comprenant une pluralité d'icônes (502a-502g, 514a-514c, 520, 524) et recevoir une opération de sélection effectuée par un utilisateur (516), l'appareil de traitement d'informations (200) comprenant :
une section d'agencement d'icônes (722) conçue pour agencer les icônes dans un espace virtuel ;
une section de commande du champ de vue (714) conçue pour acquérir des informations de posture concernant une tête de l'utilisateur (516) et déterminer un plan de champ de vue par rapport à l'espace virtuel en fonction des informations de posture acquises ;
une section de génération d'image (716) conçue pour dessiner une image devant être projetée dans l'espace virtuel par rapport au plan de champ de vue, générer l'écran de menu (500) sur lequel est affiché un curseur (504, 522) indiquant le point de vue de l'utilisateur (516), et délivrer l'écran de menu généré (500) à un dispositif d'affichage ; et
une section de détermination d'opération (718) conçue pour identifier une opération en fonction d'une relation de position entre le curseur (504, 522) et une image d'icône dessinée sur l'écran de menu (500),
dans lequel la section d'agencement d'icônes (722) est conçue pour agencer les icônes (502a-502g, 514a-514c, 520, 524) dans un objet d'arrière-plan sphérique centré autour de la tête de l'utilisateur (516) dans l'espace virtuel de telle manière que les icônes (502a-502g, 514a-514c, 520, 524) diffèrent les unes des autres en ce qui concerne une direction et une distance par rapport à l'utilisateur (516),
et **caractérisé en ce que**,
lorsque le curseur (504, 522) chevauche l'une des icônes (502a-502g, 514a-514c, 520, 524), la section de génération d'image (716) est conçue pour effectuer un mappage de texture d'une image correspondant à l'icône (502a-502g, 514a-514c, 520, 524) sur un intérieur de l'objet d'arrière-plan et pour amener l'objet d'arrière-plan à tourner de manière centrale autour de la tête de l'utilisateur (516) à une vitesse prédéterminée.

2. Appareil de traitement d'informations (200) selon la revendication 1, dans lequel, lorsque le curseur (504, 522) chevauche l'une des icônes (502a-502g, 514a-514c, 520, 524), la section d'agencement d'icônes (722) est conçue pour déplacer l'icône (502a-502g, 514a-514c, 520, 524) dans une direction propre à diminuer la distance par rapport à l'utilisateur (516) dans l'espace virtuel, et, lorsque le curseur (504, 522) chevauche une autre icône (502a-502g, 514a-514c, 520, 524), la section d'agencement d'icônes (722) est conçue pour ramener l'icône déplacée (502a-502g, 514a-514c, 520, 524) à la position précédente.

3. Appareil de traitement d'informations 8200) selon la revendication 2, dans lequel la section de génération d'image (716) est conçue pour afficher en outre un bouton de commande d'exploitation (526) sous l'icône déplacée (502a-502g, 514a-514c, 520, 524) afin de recevoir une opération effectuée sur un contenu représenté par l'icône déplacée (502a-502g, 514a-514c, 520, 524).

4. Appareil de traitement d'informations (200) selon la revendication 2 ou 3, dans lequel la section d'agencement d'icônes (722) est conçue pour régler une taille de modèle d'objet d'une icône (502a-502g, 514a-514c, 520, 524) de telle manière que plus la distance entre l'icône (502a-502g, 514a-514c, 520, 524) et l'utilisateur 8516) est grande, plus la taille de modèle d'objet de l'icône (502a-502g, 514a-514c, 520, 524) est petite, et, lorsque l'icône (502a-502g, 514a-514c, 520, 524) est déplacée dans une direction propre à diminuer la distance par rapport à l'utilisateur (516), la section d'agencement d'icônes (722) est conçue pour augmenter progressivement la taille de modèle d'objet de l'icône (502a-502g, 514a-514c, 520, 524) .

5. Appareil de traitement d'informations (200) selon l'une quelconque des revendications 1 à 4, dans lequel la section d'agencement d'icônes (722) est conçue pour agencer les icônes (502a-502g, 514a-514c, 520, 524) de telle manière qu'un groupe d'icônes (502a-502g, 514a-514c, 520, 524) disposées à proximité les unes des autres dans l'espace virtuel soit formé pour chaque catégorie à laquelle appartient une cible représentée par chaque icône (502a-502g, 514a-514c, 520, 524).

6. Appareil de traitement d'informations (200) selon l'une quelconque des revendications 1 à 5, dans lequel la section d'agencement d'icônes (722) est conçue pour mettre à jour l'agencement des icônes (502a-502g, 514a-514c, 520, 524) en fonction d'une augmentation ou d'une diminution du nombre d'icônes (502a-502g, 514a-514c, 520, 524) devant être affichées.

7. Appareil de traitement d'informations (722) selon l'une quelconque des revendications 1 à 6, dans lequel, lorsque le curseur (504, 522) chevauche une icône (502a-502g, 514a-514c, 520, 524) représentative d'informations hiérarchiques à un niveau hiérarchique supérieur, la section d'agencement d'icônes (722) est conçue pour disposer à nouveau une icône (502a-502g, 514a-514c, 520, 524) représentative d'informations pertinentes à un niveau hiérarchique inférieur.

8. Appareil de traitement d'informations (200) selon l'une quelconque des revendications 1 à 7, dans lequel la section d'agencement d'icônes (722) est conçue pour définir une plage prédéterminée en tant que région où des icônes (502a-502g, 514a-514c, 520, 524) ne peuvent pas être disposées, la plage prédéterminée comprenant un zénith et un nadir pour la tête de l'utilisateur (516) dans l'espace virtuel.

9. Procédé de réception d'opération appliqué par un appareil de traitement d'informations (200) qui génère un écran de menu (500) comprenant une pluralité d'icônes (502a-502g, 514a-514c, 520, 524) et reçoit une opération de sélection effectuée par un utilisateur (8516), le procédé de réception d'opération comprenant les étapes consistant à :
agencer les icônes (502a-502g, 514a-514c, 520, 524) dans un espace virtuel ;
acquérir des informations de posture concernant une tête de l'utilisateur (516) et déterminer un plan de champ de vue par rapport à l'espace virtuel en fonction des informations de posture acquises ;
dessiner une image devant être projetée dans l'espace virtuel par rapport au plan de champ de vue, générer l'écran de menu (500) sur lequel est affiché un curseur (504, 522) indiquant le point de vue de l'utilisateur (516), et délivrer l'écran de menu généré à un dispositif d'affichage ; et
identifier une opération en fonction d'une relation de position entre le curseur (504, 522) et une image d'icône dessinée sur l'écran de menu (500),
dans lequel l'étape d'agencement des icônes (502a-502g, 514a-514c, 520, 524) consiste à agencer les icônes (502a-502g, 514a-514c, 520, 524) dans un objet d'arrière-plan sphérique centré autour de la tête de l'utilisateur (516) dans l'espace virtuel de telle manière que les icônes (502a-502g, 514a-514c, 520, 524) diffèrent les unes des autres en ce qui concerne une direction et une distance par rapport à l'utilisateur (516),
et **caractérisé en ce que**,
lorsque le curseur (504, 522) chevauche l'une des icônes (502a-502g, 514a-514c, 520, 524), une image correspondant à l'icône (502a-502g, 514a-514c, 520, 524) est soumise à un mappage de texture sur un intérieur de l'objet d'arrière-plan et l'objet d'arrière-plan est amené à tourner de manière centrale autour de la tête de l'utilisateur (516) à une vitesse prédéterminée.

10. Programme d'ordinateur conçu pour un ordinateur qui génère un écran de menu (500) comprenant une pluralité d'icônes (502a-502g, 514a-514c, 520, 524) et reçoit une opération de sélection effectuée par un utilisateur (516), le programme d'ordinateur amenant l'ordinateur à mettre en œuvre des fonctions consistant à :
agencer les icônes (502a-502g, 514a-514c, 520, 524) dans un espace virtuel ;
acquérir des informations de posture concernant une tête de l'utilisateur (516) et déterminer un plan de champ de vue par rapport à l'espace virtuel en fonction des informations de posture acquises ;
dessiner une image devant être projetée dans l'espace virtuel par rapport au plan de champ de vue, générer l'écran de menu (500) sur lequel est affiché un curseur (504, 522) indiquant le point de vue de l'utilisateur (516), et délivrer l'écran de menu généré (500) à un dispositif d'affichage ; et
identifier une opération en fonction d'une relation de position entre le curseur (504, 522) et une image d'icône dessinée sur l'écran de menu (500),
dans lequel la fonction d'agencement des icônes (502a-502g, 514a-514c, 520, 524) consiste à agencer les icônes (502a-502g, 514a-514c, 520, 524) dans un objet d'arrière-plan sphérique centré autour de la tête de l'utilisateur (516) dans l'espace virtuel de telle manière que les icônes (502a-502g, 514a-514c, 520, 524) diffèrent les unes des autres en ce qui concerne une direction et une distance par rapport à l'utilisateur (516),
et **caractérisé en ce que**,
lorsque le curseur (504, 522) chevauche l'une des icônes (502a-502g, 514a-514c, 520, 524), une image correspondant à l'icône (502a-502g, 514a-514c, 520, 524) est soumise à un mappage de texture sur un intérieur de l'objet d'arrière-plan et l'objet d'arrière-plan est amené à tourner de manière centrale autour de la tête de l'utilisateur (516) à une vitesse prédéterminée.
